# EUROPÄISCHE PATENTANMELDUNG

(11) **EP 2 336 448 A2**
(43) Veröffentlichungstag der Anmeldung: **22.06.2011**
(21) Anmeldenummer: 10015567.0
(22) Anmeldetag: 13.12.2010
(51) Int. Cl.: E04D 1/28

(54) **Dachziegel mit Trägerkörper aus wenigstens zwei Schichten**

(30) Priorität: 15.12.2009 AT 19862009
(71) Anmelder: Deutsch, Sabine Mag. (FH), 6075 Tulfes (AT)
(72) Erfinder: Tilg, Hubert, 6465 Nassereith (AT); Ausserlechner, Georg, 6176 Völs (AT)
(74) Vertreter: Gangl, Markus

(57) **Zusammenfassung**

Dachziegel (1) mit einer - insbesondere metallischen - witterungsbeständigen Außenhaut (4) und einem mit der Außenhaut (4) verbundenen und von dieser wenigstens teilweise abgedeckten Trägerkörper (5), wobei der Trägerkörper (5) aus wenigstens zwei Schichten (51, 52, 53, 54) besteht, von denen eine erste Schicht (51) mit der Außenhaut (4) und die restlichen Schichten (52, 53, 54) mit der ersten Schicht (51) verbunden bzw. verbindbar sind, **dadurch gekennzeichnet, dass** die erste Schicht (51) mit der Außenhaut (4) vorkonfektioniert ist und die restlichen Schichten (52, 53, 54) nachträglich mit der ersten Schicht (51) verbunden bzw. verbindbar sind.

## Beschreibung

Die Erfindung betrifft einen Dachziegel mit einer - insbesondere metallischen - witterungsbeständigen Außenhaut und einem mit der Außenhaut verbundenen und von dieser wenigstens teilweise abgedeckten Trägerkörper, sowie ein Verfahren zu dessen Herstellung und einen Dachverband, der solche Dachziegel aufweist.

Ein derartiger Dachziegel ist beispielsweise bereits aus der prioritätsälteren, aber nachveröffentlichten AT 506 953 B1 bekannt. Dieser Dachziegel kann mit unterschiedlichen Funktionalitäten ausgebildet sein. Genannt sind beispielsweise ein isolierender Dachziegel mit Photovoltaik-Funktion, ein Dachziegel mit Solarkollektorfunktion, ein Dachziegel mit Fensterfunktion und ein Dachziegel, der nur die Isolierfuntion aufweist. Für jede Funktion sind dabei unabhängige Dachziegel vorzusehen, sodass jeweils eigene Produktionsabläufe erforderlich sind.

Insbesondere betrifft die Erfindung weiters, dass der Trägerkörper aus wenigstens zwei Schichten besteht, von denen eine erste Schicht mit der Außenhaut und die restliche(n) Schicht(en) mit der ersten Schicht verbunden bzw. verbindbar ist(sind). Ein Dachziegel mit einem derartigen zweiteiligen Trägerkörper geht aus der US 2,400,357 hervor.

Weiters zeigt die NL 1025787 ein mehrlagiges Abdecksystem für ein Dach, wobei die einzelnen Teile des Daches auf schienenförmigen Bauteilen in Form von Koppelelementen aufliegen. Auf die Mehrteiligkeit des Trägerkörpers wird in dieser Schrift, wie auch in der JP 2007-009655, nicht eingegangen, wobei diese japanische Schrift einen Dachziegel aus einem zuerst gefertigten keramischen Ziegel, an dem ein geschäumter vorgefertigter Trägerkörper angepresst wird, zeigt.

Aufgabe der Erfindung ist es, einen Dachzlegel bereitzustellen, der unter anderem bei Beibehaltung der Möglichkeit, ihn mit unterschiedlichen Funktionalitäten auszubilden, den Vorteil aufweist, leichter herstellbar zu sein. Insbesondere soll die Produktion, Anbringung und der Transport einfacher und unkomplizierter erfolgen.

Diese Aufgabe wird durch einen Dachziegel mit den Merkmalen des Anspruchs 1 gelöst. Erfindungsgemäß ist demnach vorgesehen, dass die erste Schicht mit der Außenhaut vorkonfektioniert (vorgefertigt) ist und die restlichen Schichten nachträglich mit der ersten Schicht verbunden bzw. verbindbar sind. Diese nachträgliche Verbindung kann beispielsweise erst bei der Montage auf dem Dach erfolgen, wodurch der Transport erleichtert wird. Bevorzugt kann weiters vorgesehen sein, dass die restlichen, unteren Schichten nur über die erste Schicht mit der Außenhaut verbunden bzw. verbindbar sind. Im Bereich der Berührung dieser oberen und unteren Schicht kann bevorzugt ein Teil der zweiten wasserführenden Ebene ausgebildet sein (die erste Ebene wird durch die Außenhaut gebildet). Generell ist bevorzugt vorgesehen, wenn auf der außenhautzugewandten Seite des Trägerkörpers eine erste (Isolier-)Schicht und auf der außenhautabgewandten Seite des Isolierkörpers eine zweite (Isolier-)Schicht ausgebildet ist.

Um eine möglichst einfache Herstellung zu erreichen, kann vorgesehen sein, dass die erste Schicht an der Außenhaut angeschäumt oder angeklebt ist. Dadurch kann beispielsweise nur ein schmaler Teil, beispielsweise jener, der an der Außenhaut anliegt, geschäumt werden und der andere Teil aus einem vorgefertigten anderen Schaumteil oder beispielsweise einem bereits zugeschnittenen Styroporbauteil gebildet werden.

Gemäß einem bevorzugten Ausführungsbeispiel kann vorgesehen sein, dass die zweite Schicht mit der ersten Schicht durch eine geschäumte Zwischenschicht verbunden oder an dieser angeklebt ist. Bevorzugt kann weiters vorgesehen sein, dass zumindest eine Schicht des Trägerkörpers eine Isolierschicht ist.

Um den erfindungsgemäßen Dachziegel noch bessere Eigenschaften zu verleihen, kann vorgesehen sein, dass weitere schalldämmende, stabilitätsgebende und/oder dampfabweisende Schichten zwischen oder an den Schichten angeordnet sind. Der Dachziegel kann vielfältig eingesetzt werden, indem auf einer Seite, vorzugsweise der trägerkörperabgewandten Seite, der Außenhaut Solarelemente angeordnet sind. Diese Solarelemente können beispielsweise temperiermedienführende Leitungen oder Photovoltaikmodule sein. Die Dachziegel können auch Ausnehmungen und Durchbrechungen aufweisen, sodass sie als sogenannte Fensterziegel verwendet werden können.

Schutz wird auch begehrt für ein Verfahren zur Herstellung eines Dachziegels gemäß Anspruch 9. Besonders bevorzugt erfolgt die Herstellung eines solchen Dachziegels mit den Schritten Herstellen der witterungsbeständigen Außenhaut, Anschäumen der ersten Schicht an der Außenhaut, separates Herstellen/Schäumen weiterer Schichten, Einlegen der Teilstücke in eine gemeinsame Form, wobei zumindest ein Hohlraum zwischen den Teilstücken freigelassen wird, Einbringen von Füllmaterial, vorzugsweise Weichschaum, in den zumindest einen Hohlraum und Verbinden der Teilstücke durch das Füllmaterial. Die Herstellungsschritte müssen nicht zwangsweise in der beschriebenen Reihenfolge durchgeführt werden, sondern können auch zumindest teilweise zeitgleich oder umgekehrt ausgeführt werden.

Die gemeinsame Form kann bevorzugt auch bereits beim Anschäumen der ersten Schicht an der Außenhaut vorgesehen sein, um dieser bereits die Form vorzugeben. Wenn dann ein weiteres Teilstück (beispielsweise geschäumt oder vorgefertigtes Styropor) in die Form eingesetzt wird, kann ein kleiner Zwischenraum freigelassen werden, um dort ein Auffüll- bzw. Verbindungsmaterial (vorzugsweise Weichschaum) einzubringen. Generell sind die bevorzugten Grundbestandteile für den Schaumkunststoff Polyol und Isocyanat. Bezüglich der genauen Herstellungsweise sei insbesondere auf die in der AT 506 953 B1 angegebenen Informationen verwiesen.

Schutz wird weiters begehrt für einen Dachverband gemäß Anspruch 11, wobei bevorzugte Ausführungsbeispiele zu dem Dachverband in den Unteransprüchen 12 bis 14 angegeben sind.

Um eine gute Fixierung und Anbringung der einzelnen Dachziegel an der gesamten Dachkonstruktion zu erreichen, kann vorgesehen sein, dass die wenigstens zwei Dachziegel das schienenförmige Bauteil teilweise überdecken, wobei die wenigstens zwei Dachziegel über ein zwischen den Dachziegeln einbringbares Befestigungsmittel am schienenförmigen Bauteil beispielsweise verschraubbar sind, Daraus ergeben sich zwei Vorteile: Erstens muss kein Dachziegel direkt mit der Dachunterkonstruktion verbunden werden, sodass sich keine Wärmebrücke bildet. Zweitens werden mit einer einzigen Schraube zwei Dachziegel am schienenförmigen Bauteil fixiert. Das schienenförmige Bauteil selbst kann wiederum über separate Befestigungselemente an der Dachunterkonstruktion befestigt werden.

Bevorzugterweise ist allerdings vorgesehen, dass pro Schiene und zwei nebeneinander angeordneten Dachziegel zumindest zwei Befestigungsschrauben (im oberen und im unteren Bereich) vorgesehen sind. Da dies auf jeder benachbarten Schiene dann wiederum der Fall ist, ist jeder Dachziegel längsseitig vierfach mit dem schienenförmigen Bauteil verbunden, wobei aber insgesamt nur die doppelte Menge von Befestigungsschrauben als die Anzahl der Dachziegel notwendig ist (bis auf den Randbereich des Daches). An kraftbelasteten Bereichen des Dachverbandes können auch mehr Befestigungspunkte vorgesehen sein.

Ein weiterer wesentlicher Vorteil bei der Anbringung der Dachziegel am schienenförmigen Bauteil liegt darin, dass die einzelnen Dachziegel allesamt bohrlochlos ausgeführt werden können, da die wenigstens zwei Dachziegel längsseitig aneinander angrenzen, wobei in zumindest einer der längsseitigen Oberflächen eine nicht rundum geschlossene Vertiefung zur Führung der einbringbaren Befestigungsschraube ausgebildet ist.

Um die Fixierung von zwei Dachziegeln mit nur einer Befestigungsschraube zu erreichen, ist bevorzugt vorgesehen, dass der Kopf der Befestigungsschraube auf beiden Dachziegeln, vorzugsweise an deren witterungsbeständiger Außenhaut, gegebenenfalls über eine Kalotte, kraftschlüssig anliegt.

Die eigentliche Befestigung erfolgt dadurch, dass die Befestigungsschraube durch Einschrauben unter Ausbildung eines Bohrlochs im schienenförmigen Bauteil formschlüssig hält, wobei im schienenförmigen Bauteil ein vorzugsweise durch die gesamte Länge des Bauteils durchreichender, fester Einlegekem (beispielsweise aus Polyurethan) ausgebildet ist. Das schienenförmige Bauteil selbst kann zumindest zweiteilig ausgeführt sein, wobei ein Teil ein PU-Schaumkem ist und ein Teil ein Einlegekem. Zudem können Befestigungselemente integriert sein, die aber keine Wärmebrücke bilden und somit immer thermisch entkoppelt sind. Es können unabhängig von den bisher besprochenen Maßnahmen Verstärkungseinlagen, wie beispielsweise Gewebe, Stahl oder Stahleinlagen im schienenförmigen Bauteil integriert sein, um die Verwendung der schienenförmigen Bauteile als Dachsparren und/oder Querträger zu ermöglichen. Diese Verstärkung ist insbesondere für die Dachsparren- und/oder Querträgerverwendung von Vorteil, kann jedoch allgemein vorgesehen sein.

Gemäß einem bevorzugten Ausführungsbeispiel kann vorgesehen sein, dass der Dachziegel einen aus Schaumkunststoff bestehenden Isolierkörper (Trägerkörper) zur thermischen Isolation des Dachverbandes aufweist, wobei der Isolierkörper an die Außenhaut angeschäumt ist und mit dieser einen mechanischen Verbund bildet, wobei der Isolierkörper auf seiner der Deckfläche abgewandten Seite frei von der witterungsbeständigen Außenhaut ist

Weiters kann bevorzugt vorgesehen sein, dass der Trägerkörper aus Schaumkunststoff besteht und einen Isolierkörper zur thermischen Isolation des Dachverbandes bildet, wobei der Isolierkörper auf seiner zur Deckfläche des Dachziegels gerichteten Seite eine Wanne bildet, wobei die Außenhaut rahmenförmig ausgebildet ist und den zentralen Bereich der Deckfläche des Dachziegels frei lässt.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Es zeigen:
- Fig. 1a und 1c: einen Dachziegel nach dem Stand der Technik,
- Fig. 1b: einen Querschnitt durch einen mehrschichtigen Dachziegel,
- Fig. 2: die Ansicht eines mehrschichtigen Dachziegels,
- Fig. 3a bis 3c: diverse Ansichten des Dachziegels,
- Fig. 4a bis 4e: diverse Ansichten und Detailausschnitte des Dachziegels,
- Fig. 6a bis 5f: den Schichtaufbau des Dachziegels,

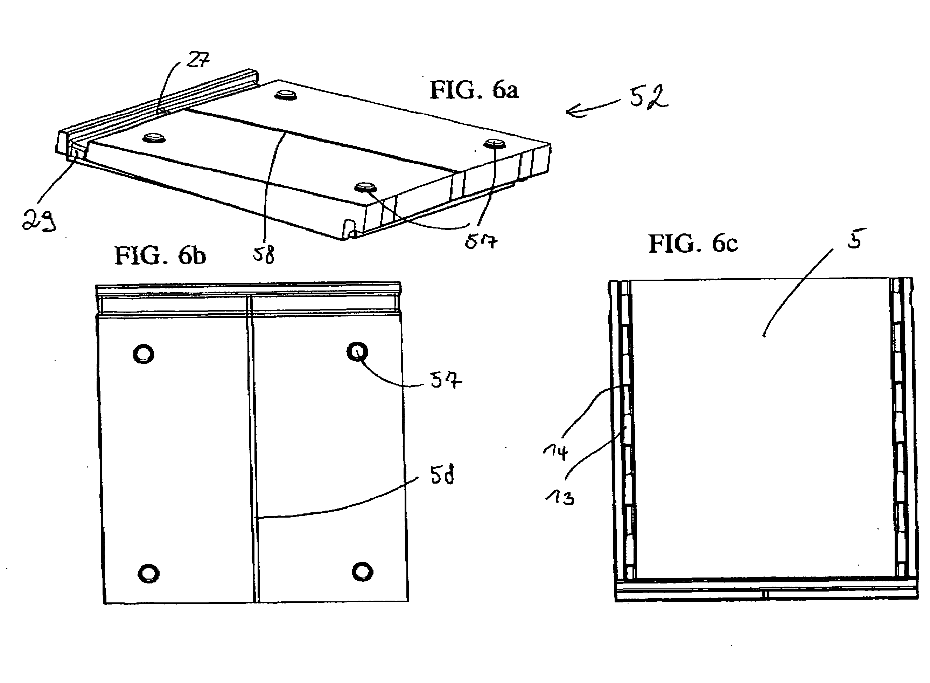

- Fig. 6a bis 6c: Ansichten und Draufsichten auf die zweite Isolierschicht,

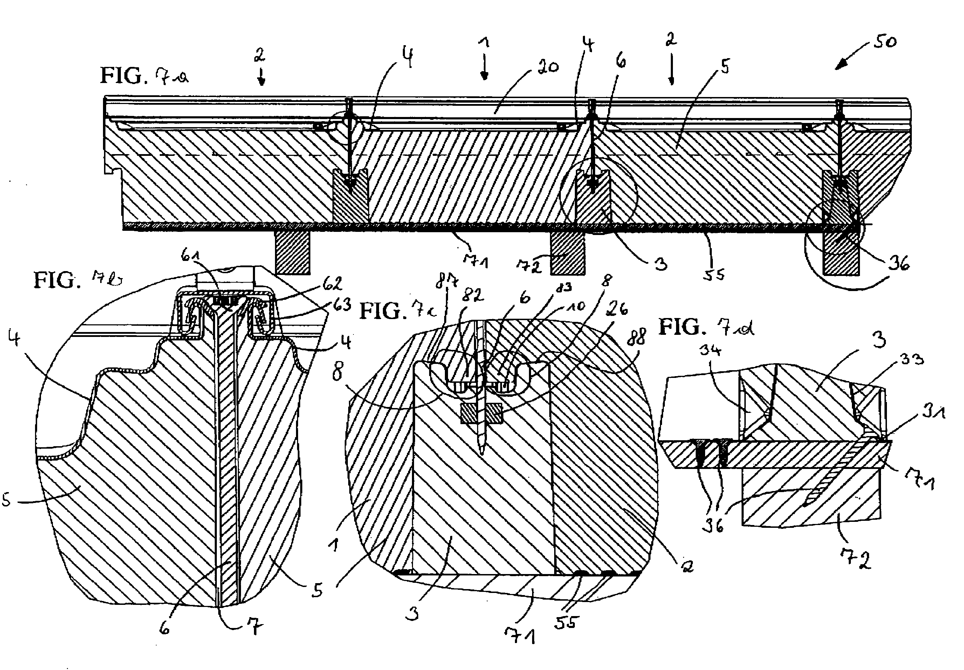

- Fig. 7a bis 7e: den Dachverband im Querschnitt und Detailausschnitte,

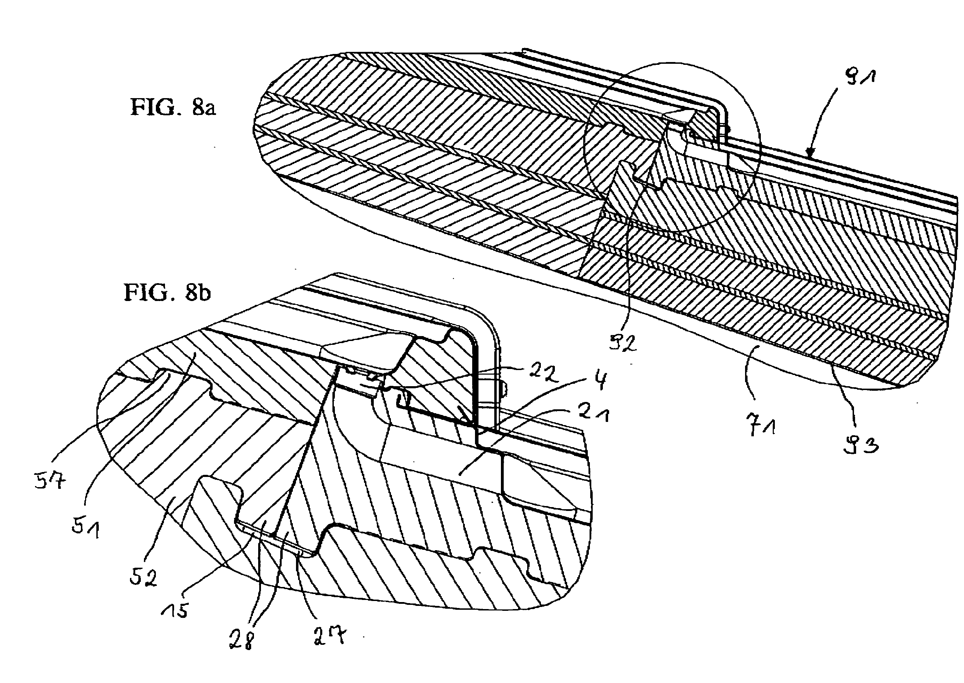

- Fig. 8a und 8b: Längsschnitte durch den Überlappungsbereich der Dachziegelbreitseite,

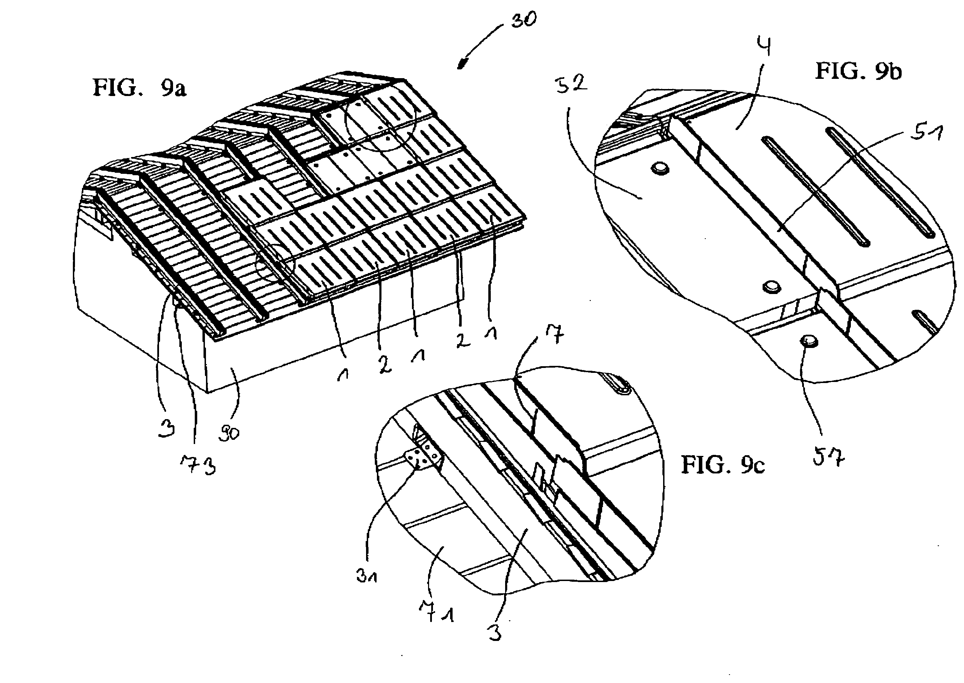

- Fig. 9a bis 11d: diverse Ansichten und Details des Dachverbands,

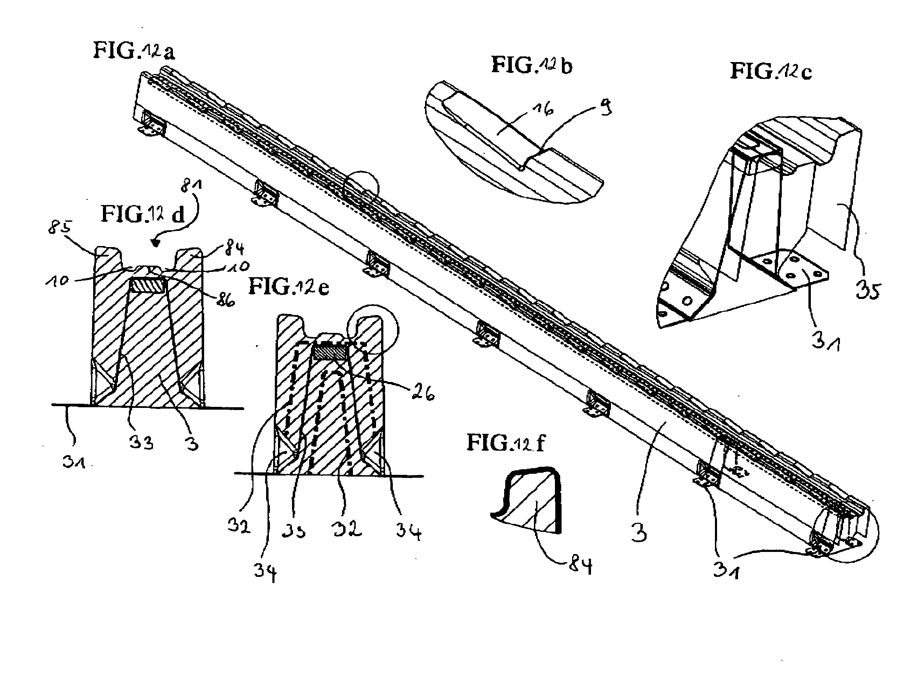

- Fig. 12a bis 12f: Ansichten und Schnitte des schienenförmigen Bauteils,

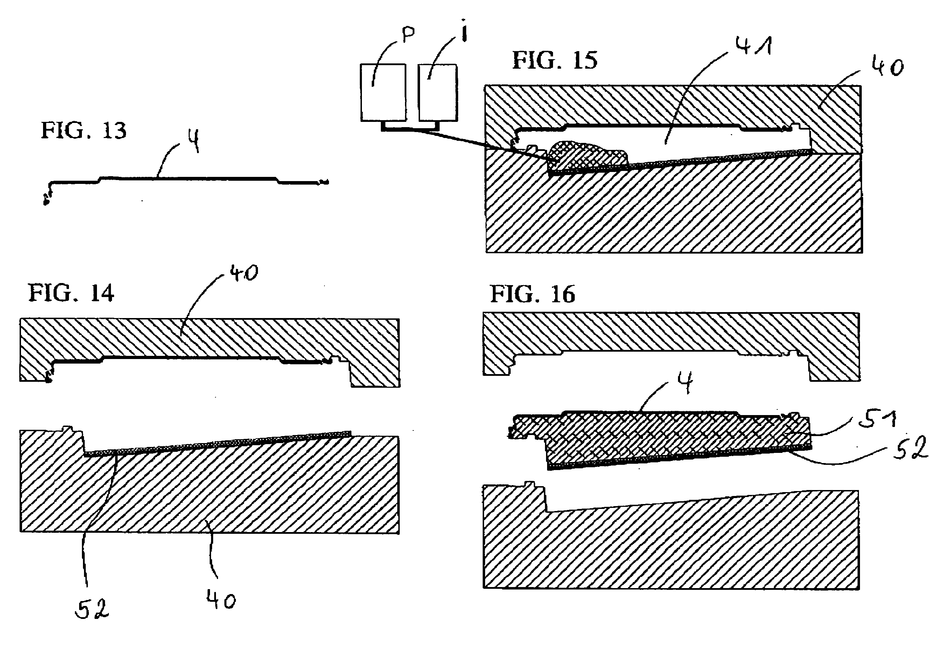

- Fig. 13 bis 21: einzelne Verfahrensschritte des Herstellungsverfahrens,

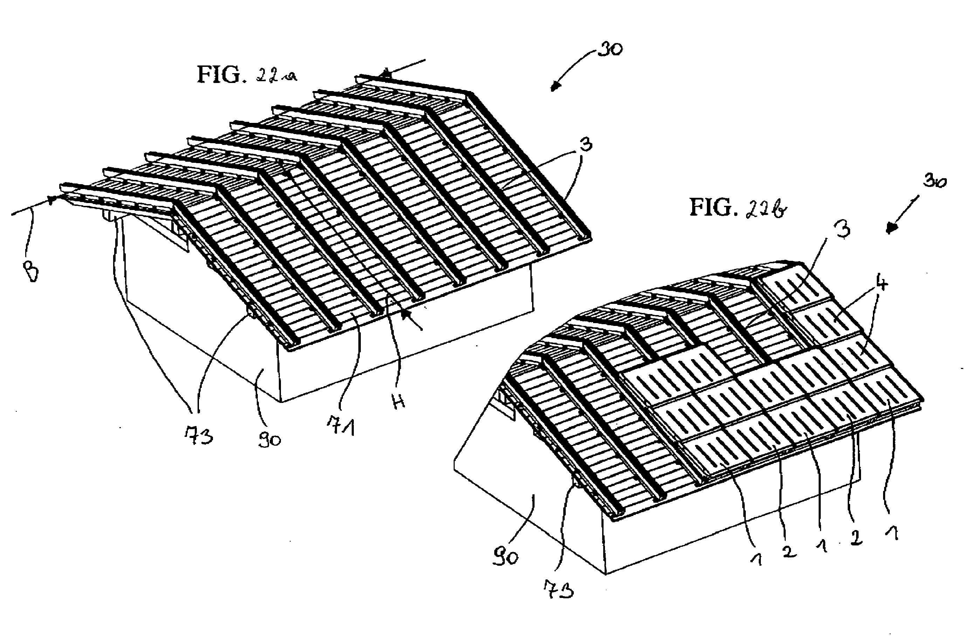

- Fig. 22a, 22b: ein Dach mit vorgefertigter Dachtragekonstruktion,

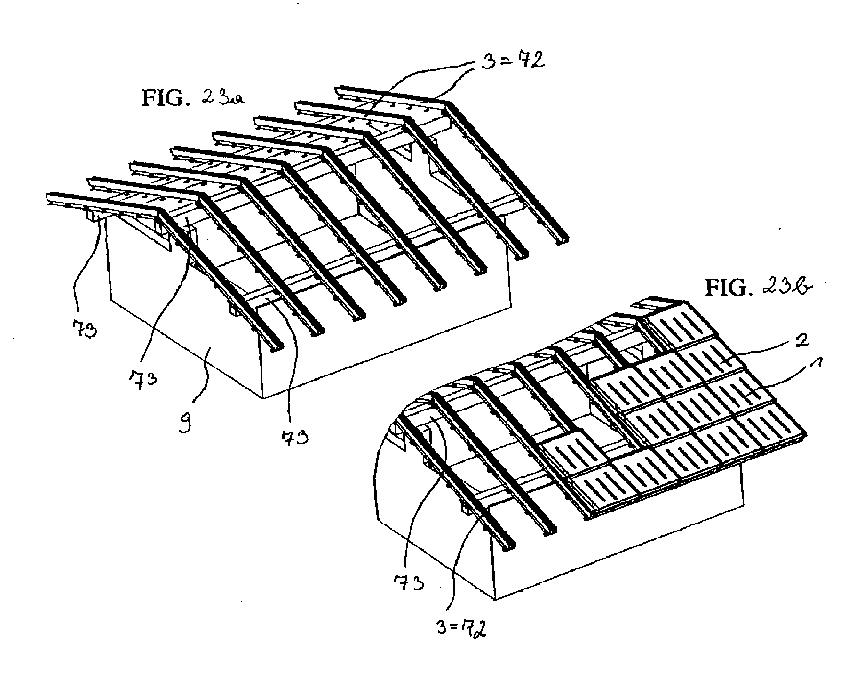

- Fig. 23a, 23b: eine Dachkonstruktion, bei der die schienenförmigen Bauteile die Dachsparren bilden,

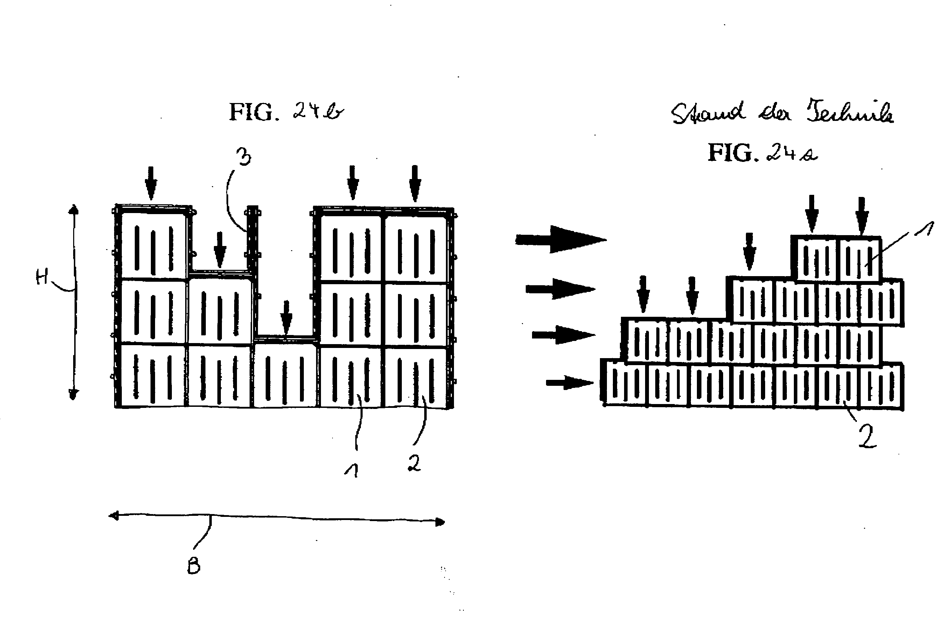

- Fig. 24a,: eine Dachziegelanordnung nach dem Stand der Technik,
- Fig. 24b: die neuartige Dachziegelanordnung und

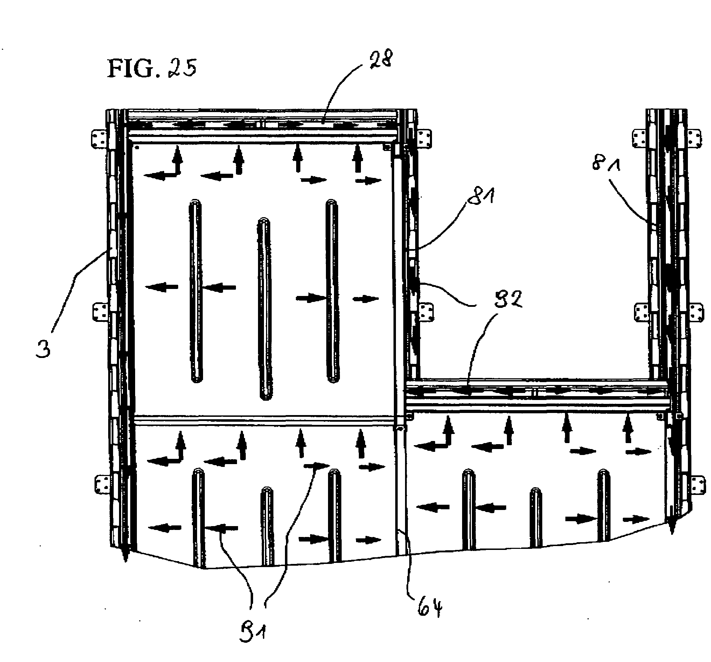

- Fig. 25: eine Draufsicht auf die Dachziegel mit Darstellung der Wasserablaufrichtungen.

In allen nachstehend diskutierten Figuren ist der Trägerkörper als Isolierkörper 5 ausgebildet. Es versteht sich von selbst, dass dies nur rein beispielhaft gemeint ist und auch solche Trägerkörper der Erfindung entsprechen, die entweder nur einzelne Isolierschichten aufweisen oder aber überhaupt keine Isoliertunktion aufweisen. In diesem Sinne kann in der nachstehenden Figurenbeschreibung (wo es für den Fachmann sinnvoll ist) der Begriff "Isolierkörper 5" stets durch "Trägerkörper 5" ersetzt werden.

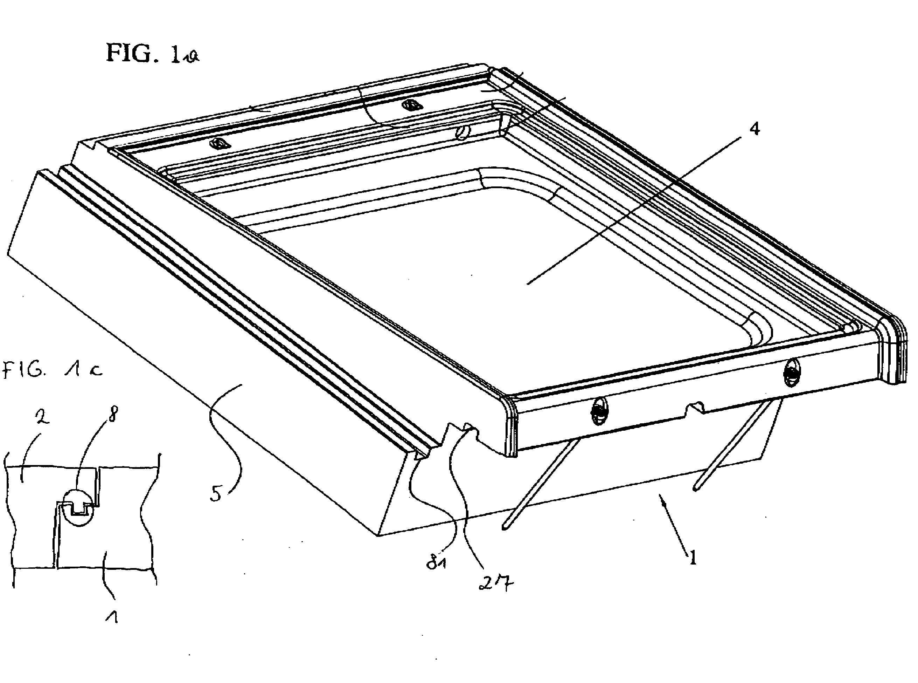

Fig. 1a und 1c zeigt einen Dachziegel 1 und eine Nut-Feder-Verbindung 8 nach dem Stand der Technik, wobei dieser eine Außenhaut 4 und einen Trägerkörper (hier Isolierkörper 5) aufweist. Im Isolierkörper 5 selbst sind dabei eine Längsseitennut 81 und die Breitseitennut 27 ausgebildet. Bei diesem Stand der Technik werden benachbarte Dachziegel 1 und 2 direkt über deren Isolierkörper 5 und den entsprechenden Nut-Feder-Verbindungen miteinander verbunden. Dies bringt die Nachteile, dass einzelne Dachziegel nur umständlich ausgetauscht werden können, eine schlechte Wasserableitung für eintretendes Wasser gegeben ist sowie ein ebener Untergrund zur exakten Anbringung bereits vorgegeben sein muss. Der Nachteil des gezeigten, relativ dicken Schaumkunststoffisolierkörpers liegt dabei in der relativ schwierigen Herstellung eines einzelnen so dicken geschäumten Teiles. Durch die chemischen Reaktionen bei dicken Isolierkörpern (ca. 20 cm) ist die entstehende Reaktionshitze sehr schwer abführbar, da die Masse relativ zur wärmeableitenden Oberfläche sehr groß ist.

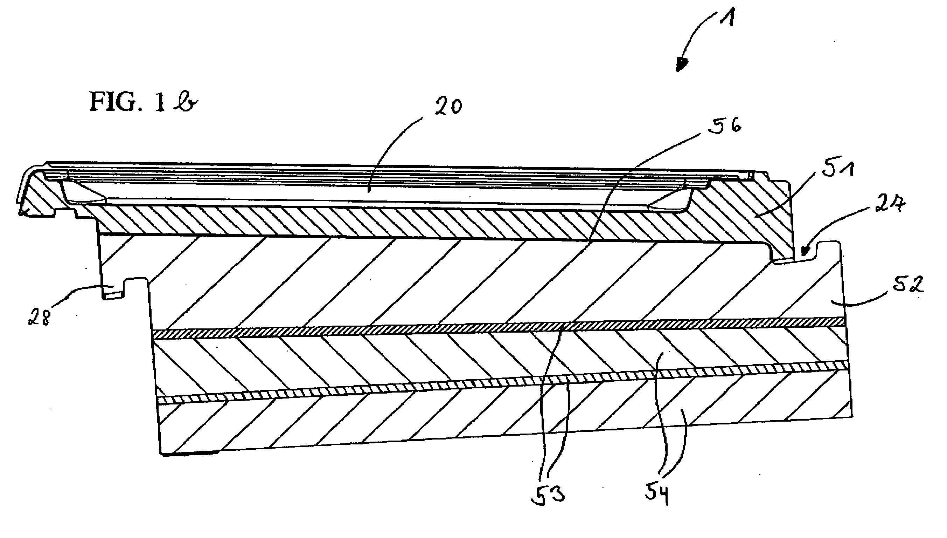

Demgegenüber zeigt Fig. 1b einen Längsschnitt durch den Dachziegel 1 mit schichtförmigem Aufbau des Isolierkörpers 5. Der Isolierkörper 5 weist zumindest eine erste 51 und zweite 52 Isolierschicht auf, wobei bevorzugt die erste Isolierschicht 51 an der Außenhaut 4 angeklebt oder angeschäumt ist. Die zweite Isolierschicht 52 kann bereits vorgefertigt (beispielsweise aus Styropor) oder vorgeschäumt sein. Diese Schicht 52 weist bereits die endgültige Form auf. Gemäß dieser Fig. 1 b sind an der außenhautabgewandten Seite der Isolierschicht 52 zwei weitere Zwischenschichten 53 und zwei sonstige Schichten 54 angebracht, wobei diese beispielsweise dem Schallschutz, der Dämmung oder der Stabilität dienen können. In diesem Isolierkörper 5 sind generell die breitseitigen Nuten 27 und Federn 28 ausgebildet. Die einzelnen Schichten können beispielsweise aus Styropor, PU, sonstigem Dämmmaterial, Weichschaum, Mineralvllesplatten oder Ähnlichem hergestellt sein.

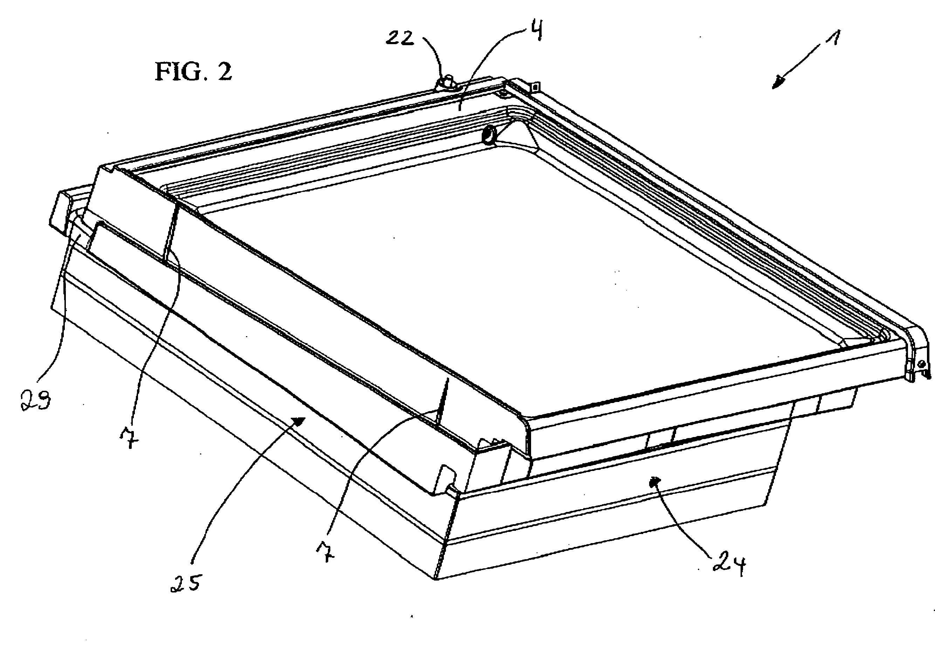

Fig. 2 zeigt eine Ansicht dieses Dachziegels 1, wobei die Außenhaut 4 einen wannenförmigen Bereich zur Aufnahme eines hier nicht dargestellten Solarelements 20 aufweist, wobei bereits die Anschlussstücke 22 dargestellt sind. Wichtig sind an der längsseitigen Oberfläche 25 des Isolierkörpers 5 die bereits ausgebildeten Vertiefungen 7, die der späteren Führung der Befestigungsschrauben 6 beim Anbringen des Dachziegels 1 dienen. Die Breitseite des Dachziegels 1 ist mit 24 bezeichnet. Mit 29 ist in dieser Fig. 2 eine Freistellung für den Wasserablauf von der Breitseitennut 27 in ein darunter liegendes schienenförmiges Bauteil 3 angegeben.

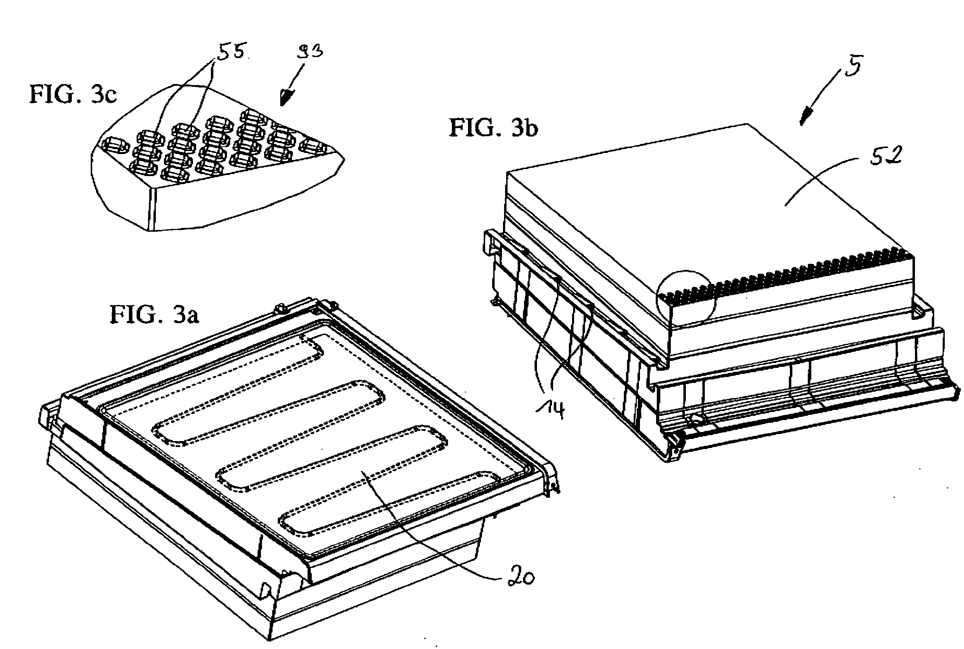

Fig. 3a zeigt eine Ansicht des Dachziegels 1, wobei das Solarelement 20 mit Fluidleitungen dargestellt ist. In Fig. 3b ist der gesamte Isolierkörper 5 bzw. Isolierschicht 52 von unten dargestellt, wobei darauf die Noppenstruktur 55 erkennbar ist. Über diese Noppenstruktur 55 liegt der Dachziegel 1 an einer Verschalung 71 auf. Durch diese Struktur wird zwischen der Verschalung 71 (Dachtragekonstruktion 70) und den Dachziegeln 1 eine dritte wasserführende Ebene 93 als Drainage gebildet. Zudem bildet diese Noppenstruktur 55 auch einen Schallschutz.

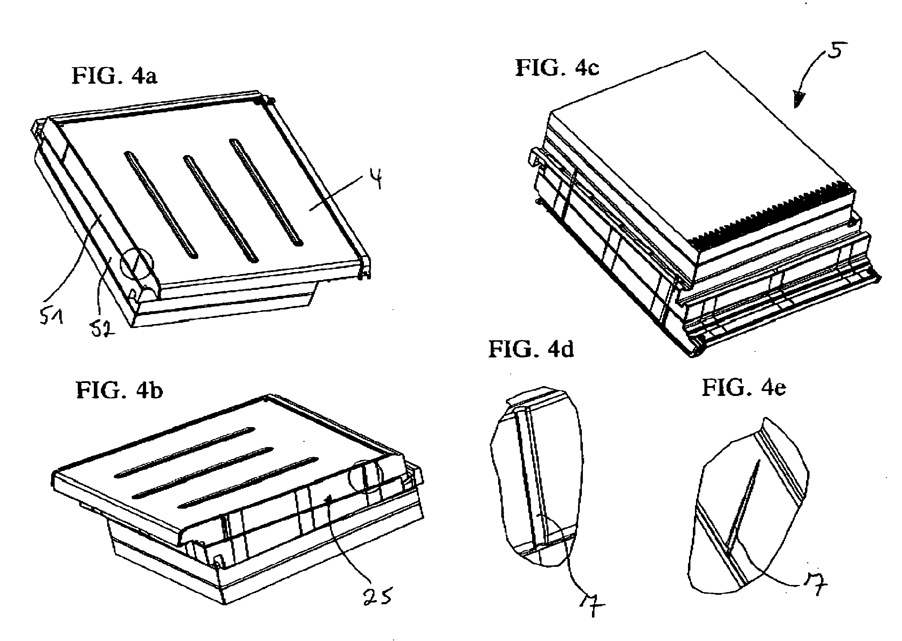

In den Fig. 4a bis 4e sind nochmals Details des erfindungsgemäßen Dachziegels 1 gezeigt, wobei insbesondere die Vertiefungen 7 als Befestigungsschraubenführung beim Montieren der Dachziegel 1, 2 im Detail dargestellt sind.

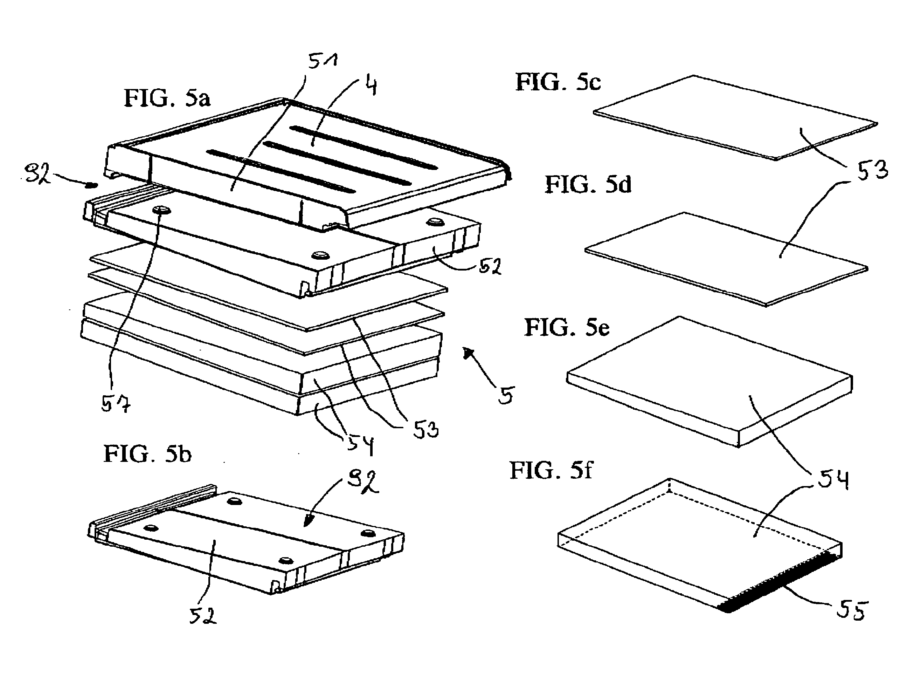

Die Fig. 5a bis 5f zeigen die einzelnen Schichten eines besonders bevorzugten Ausführungsbeispiels des hierin beschriebenen Dachziegels 1. Dieser weist von oben nach unten gesehen eine Außenhaut 4, eine erste Isolierschicht 51, eine zweite Isolierschicht 52 mit Führungsnoppen, zwei Zwischenschichten 53 und zwei weitere Schichten 54 auf. Die Isolierschicht 52 mit den darunter liegenden Zwischenschichten 54 und weiteren Schichten 53 können als separates Bauteil ausgeführt sein, sodass die unteren Teile 52, 53, 54 unabhängig vom oberen Teil 51 mit Außenhaut 4 auf dem Dach montiert werden kann. Die sich hier bildende Zwischenebene kann die zweite wasserführende Ebene 92 mitbilden. Um das nachträgliche Anbringen des oberen Teils mit der Isolierschicht 51 und der Außenhaut 4 zu erleichtern, sind an der Isolierschicht 52 Führungsnoppen 57 mit entsprechenden, nicht dargestellten Gegenstücken an der Unterseite der Isolierschicht 51 vorgesehen.

Fig. 6a zeigt die Isolierschicht 52, die im hinteren Breitseitenbereich 24 die Breitseitennut 27 aufweist. Diese bildet eine zweite wasserführende Ebene 92 (die Außenhaut 4 bildet die erste wasserführende Ebene 91). Als zusätzlicher Schutz ist diese Isolierschicht 52 leicht dachförmig ausgebildet, was aufgrund der Scheitellinie 58 und den beiden davon leicht zur Längsseite 25 abfallenden Oberflächen ersichtlich ist. Fig. 6b zeigt eine Draufsicht auf die Isolierschicht 52 samt Führungsnoppen 57 und Scheitellinie 58. Fig. 6c zeigt den gesamten Isolierkörper 5 von unten, wobei entlang der beiden Längsseiten 25 die Einraststufen 14 und Halteschrägen 13 ausgebildet sind, die an später bzw. weiter unten dargestellten schienenförmigen Bauteilen 3 und deren Haltestufen 9 verrutschsicher einrasten können.

Fig. 7a zeigt einen Querschnitt durch den Dachverband 50, wobei vier nebeneinander angeordnete Dachziegel 1,2 dargestellt sind. Oberhalb des jeweiligen Isolierkörpers 5 (der auch zwei- oder mehrteilig ausgeführt sein kann, wie es durch die Strichlierung angedeutet ist) weisen diese Dachziegel 1,2 jeweils eine Außenhaut 4 und darüber angeordnet ein Solarelement 20 auf. An den jeweiligen Breitseiten 24 der Dachziegel 1,2 greifen die Dachziegel 1,2 jeweils über Federn 82, 83 in eine Nut 81 eines schienenförmigen Bauteils 3 ein. Wie dazu in Fig. 7c ersichtlich ist, greifen diese Federn 82, 83 unter Freilassung eines Entwässerungskanales 10 in die vorgeformte Nut 81 ein. Dieser Schnitt ist genau im Bereich der Befestigungsschrauben 6 dargestellt, der zwischen den Dachziegeln 1 und 2 im Bereich des zentralen Plateaus 86 in das schienenförmige Bauteil 3 eingeschraubt ist. Zur sicheren Fixierung der Befestigungsschrauben 6 ist im schienenförmigen Bauteil 3, vorzugsweise durchgehend, ein ausreißfester Einlegekem 26 vorgesehen.

Wie aus Fig. 7b ersichtlich, ist die Befestigungsschraube 6 genau im Bereich der Führungsvertiefung 7 zwischen die Dachziegel 1,2 eingeführt und hält bzw. fixiert über den Schraubenkopf 61 und die Kalotte 62 (Zwischenscheibe, Beilagscheibe) beide Dachziegel 1,2 am schienenförmigen Bauteil 3 fest. Bevorzugt wird ein Kraftschluss vom Schraubenkopf 61 über die Kalotte 62 auf die Außenhaut 4 und weiter auf den Isolierkörper 5 erzeugt. Die Dachziegel 1,2 selbst weisen dabei kein Bohrloch auf und sind nicht direkt mit der Dachtragekonstruktion 70 verbunden, wodurch keine Wärmebrücke durch die Befestigung gegeben ist. Vielmehr sind, wie aus Fig. 7d ersichtlich, die schienenförmigen Bauteile 3 separat über Haltemittel 31 (zum Beispiel Winkel) und Befestigungsmittel 36 (beispielsweise Schrauben) an der Verschalung 71 befestigt. Die Haltemittel 31 sind bevorzugt vereinzelt über die Länge des schienenförmigen Bauteils 3 vorgesehen. Der Befestigungs- und Eingangsbereich der beiden Dachziegel 1 und 2 kann, wie beispielsweise in Fig. 7b dargestellt, durch eine aufgeschobene Abdeckschiene 63 zusätzlich geschützt sein. In dem Detail 7d ist der schienenförmige Bauteil 3 über das Befestigungsmittel 36 auch direkt mit der Dachsparre 72 verbunden bzw. in diesem gehalten. Alternativ oder zusätzlich wird durch die beiden linken Befestigungsmitteln 36 dargestellt, dass der schienenförmige Bauteil 3 über das Haltemittel 31 nur in der Verschalung 71 befestigt ist.

Fig. 8a zeigt die drei wasserführenden Ebenen 91, 92 und 93. Die oberste, erste wasserführende Ebene 91 wird dabei im Wesentlichen durch die Außenhaut 4 gebildet. Wenn dennoch Wasser auf der Längsseite 25 und der Breitseite 24 zwischen die einzelnen Dachziegel 1,2 gelangt, ist auf der Breitseite 24 als zusätzliche zweite wasserführende Ebene 92 die Breitseitennut 27 im Isolierkörper 5 des überlappten Dachziegels 1,2 ausgebildet, wobei die eingreifende Feder 28 des überlappenden Dachziegels 1,2 einen Breitseitenentwässerungskanal 15 freilässt. Dieser kann über den Abflussbereich 29 Wasser in ein auf der Längsseite 25 und unterhalb angeordnete Nut 81 des schienenförmigen Bauteils 3 weiterleiten, wodurch diese Nuten 27 und 81 bzw. Kanäle 15 und 10 (und die Oberfläche der Isolierschicht 52) gemeinschaftlich die zweite wasserführende Ebene 92 bilden.

In Fig. 25 sind dazu passend mit den Pfeilen auf den Breit- und Längsseiten der Dachziegel 1,2 die Fließrichtung von eintretendem Wasser im Bereich der zweiten wasserführenden Trennebene 92 veranschaulicht. Die erste wasserführende Trennebene 91 ist durch die entsprechend bezeichneten Pfeile auf der Außenhaut 4 selbst gebildet.

Flg. 9a und 22a und 22b zeigen ein Dach 30 eines Gebäudes 90, bei welchem die Dachtragekonstruktion 70 aus Querträgern 73, nicht dargestellten Dachsparren 72 und der Verschalung 71 besteht (die Längsausrichtung der Querträger 73 entspricht in dieser Anmeldung der Ausdehnung der Dachbreite B und die Längsausrichtung der Dachsparren 72 entspricht der Ausdehnung der Dachh 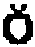 he H). Auf dieser Dachtragekonstruktion 70 sind in Dachhöhenrichtung H die schienenförmigen Bauteile 3 angebracht. Auf diese schienenförmigen Bauteile 3 sind die einzelnen Dachziegel 1, 2 nebeneinander über Nut-Feder-Verbindungen 8 in das Bauteil 3 eingreifend angeordnet. Im Detail 9b ist erkennbar, dass die Dachziegel 1,2 selbst zweiteilig ausgeführt und am Dach 30 angebracht werden können. Das heißt, zumindest ein Teil des Isolierkörpers 5 (beispielsweise bis Isolierschicht 52) liegt auf dem schlenenförmlgen Bauteil 3 und der Verschalung 71 auf, wonach der obere Teil des Dachziegels (Isolierschicht 51 und Außenhaut 4) erst bei Montage am Dach auf das untere Teil aufgebracht bzw. mit diesem verbunden werden. Dies erleichtert auch den Austausch von einzelnen beschädigten oberen oder unteren Teilen der Dachziegel. Dem verrutschsicheren Positionieren dienen die Führungsnoppen 57, die mit entsprechenden Gegenstücken auf der nicht dargestellten Unterseite der Isolierschicht 51 korrespondieren. Im Detail 9c ist ersichtlich, wie das schienenförmige Bauteil 3 über die Haltemittel 31 (hier: Befestigungslaschen) an der Verschalung 71 befestigbar ist.

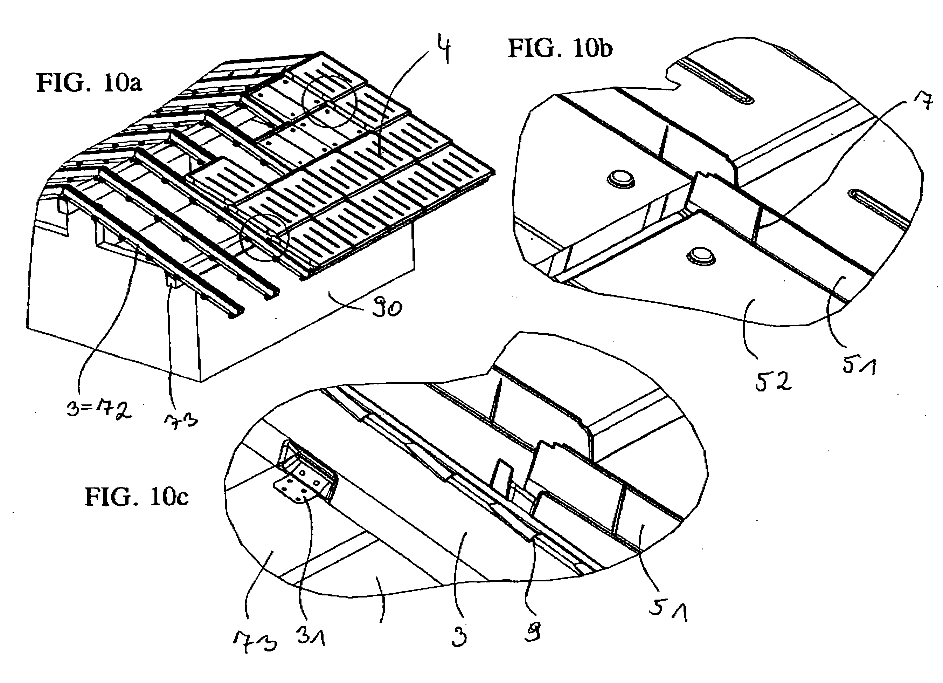

In den Fig. 10a bis 10c sowie 23a und 23b sind die schienenförmigen Bauteile 3 selbst die Dachsparren 72, die beispielsweise auch über die Befestigungslaschen 31 direkt an den Querträgern 73 angebracht bzw. montiert sind. Danach sind auf diese schienenförmigen Bauteile 3 in gleicher Art und Weise, wie bel einer vollständig separaten Dachtragekonstruktion 70 die einzelnen Dachziegel 1,2 auf die schienenförmigen Bauteile 3 aufbringbar. Auf der Unterseite des gesamten Daches 30 können dann von innen beliebige Abdeckplatten montiert werden.

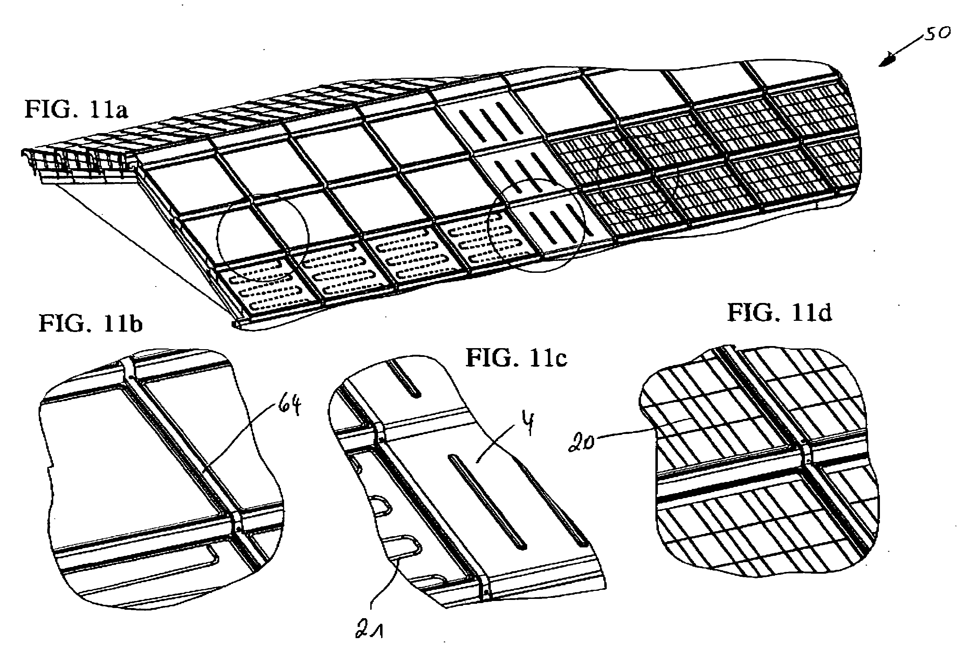

In den Fig. 11a bis 11d ist der Dachverband 50 ersichtlich, wobei unterschiedliche Arten von Dachziegeln 1,2 den Dachverband 50 bilden. Es sind dabei unterschiedliche Solarelemente 20 (Solarziegel mit Fluidleitung 21 oder Photovoltaikziegel) dargestellt. Zwischen den einzelnen Dachziegeln 1,2 kann eine zusätzliche Schutzschiene 64 der Versiegelung und der besseren Abdichtung dienen. In den Figuren sind die Schutzschiene 64 und die Abdeckschiene 63 als ein einziges Bauteil in konstruktiver Einheit ausgebildet.

Fig. 12a zeigt das schlenenförmige Bauteil 3 in seiner Gesamtausdehnung (zum Beispiel 4 Meter), wobei im vorderen Bereich (Fig. 12c) ein Anschlussstück 35 dargestellt ist. Dieses bildet eine sichere Verlängerungsmöglichkeit, wenn mehrere schienenförmige Bauteile 3 aneinandergereiht werden. Somit kann der Entwässerungskanal sicher von einem oberen zu einem unteren schienenförmigen Bauteil 3 fortgeführt werden. Das Anschlussstück 35 kann als flexibler Überstand ausgeführt werden und durch reine Anstückelung oder auch durch Verklebung mit einem weiteren schienenförmigen Bauteil 3 verbunden werden. In Fig. 12b ist die Haltestufe 9 mit entsprechender Vertiefung 16 dargestellt, in welches ein passender Dachziegel 1,2 mit dessen korrespondierenden Einraststufen 14 und Halteschrägen 13 passend eingreifen kann.

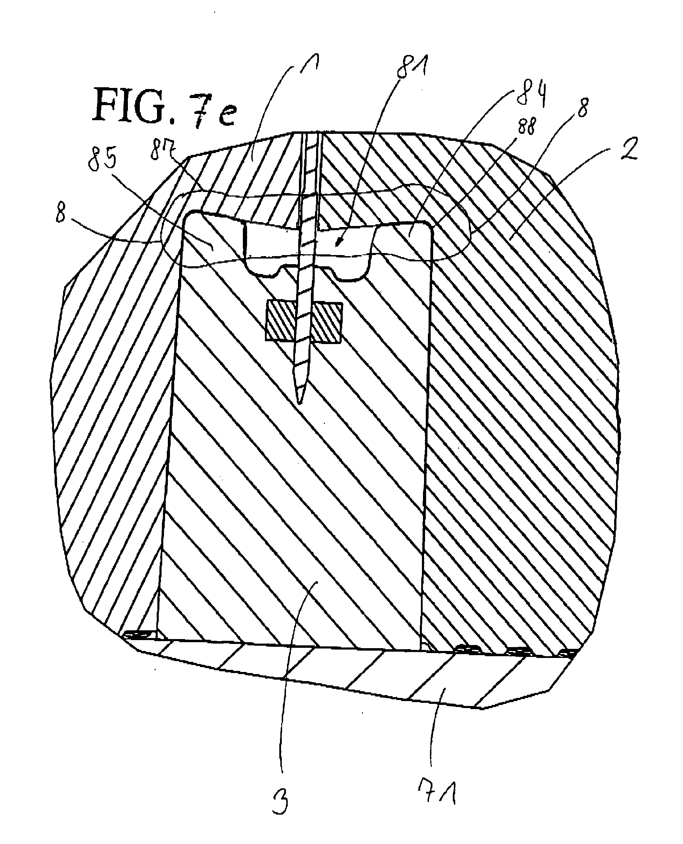

Wie in Fig. 12d und 12a ersichtlich, können die einzelnen Befestigungslaschen 31 über Befestigungshaken 33, die im schienenförmigen Bauteil 3 ausgebildet sind, miteinander verbunden werden, was zu einer sicheren, keine Wärmebrücke bildenden Befestigungsform führt. Die einzelnen Befestigungslaschen 31 sind über hier nicht dargestellte Befestigungsschrauben 36 am Dach 30 anbringbar. Die Befestigungslaschen 31 können über Ausbuchtungen 34 im schienenförmigen Bauteil 3 besser befestigt werden bzw. sind bei der Montage besser zugänglich. Im oberen Bereich der Fig. 12d ist die bevorzugte Querschnittsdarstellung des hier vorliegenden schienenförmigen Bauteils 3 gezeigt, wobei generell die Nut 81 von den beiden Erhöhungen 85 und 84 begrenzt ist. In der Nut 81 selbst sind ein vertiefter Entwässerungskanal 10 und ein zentrales Plateau 86 ausgebildet. Bei einer besonders bevorzugten Ausführungsform der Erfindung ist vorgesehen, dass die Nut-Feder-Verbindung 8 doppelt in dem Sinne ausgeführt ist, dass einerseits der schienenförmige Bauteil 3 sowohl eine Nut 81 als auch Federn 84, 85 aufweist und andererseits an den Dachziegeln 1,2 sowohl Federn 82, 83 als auch Nuten 87, 88 angeordnet sind. Es versteht sich von selbst, dass es aber für eine erfindungsgemäße Ausführung ausreichend ist, nur eine der beiden Nut-Feder-Verbindungen 8 vorzusehen. In diesem Zusammenhang sei auf die Fig. 7e verwiesen, in welcher erkennbar ist, dass hier die Dachziegel 1, 2 keine eingreifenden Federn aufweisen. Hier besteht nur eine einzige Nut-Feder-Verbindung 8, nämlich zwischen den zwei Federn 84, 85 des schienenförmigen Bauteils 3 und Nuten 87, 88 der Dachziegel 1,2. Die Nuten 87, 88 sind hier nur einseitig geschlossen ausgebildet.

Insbesondere bei den freitragenden schienenförmigen Bauteilen 3 gemäß Fig. 10a ist es wichtig, in diesen Bauteilen 3 zusätzliche Verstärkungsschichten 32 wie beispielsweise Glasfasermatten einzufügen. Diese sind in Fig, 12e durch die Strichpunktierung ersichtlich gemacht.

In den Fig. 13 bis 16 ist ein erstes mögliches Herstellungsverfahren veranschaulicht. In einem ersten Schritt wird die Außenhaut 4, beispielsweise in einer Metallpresse, ausgestanzt und vorgeformt. Anschließend gelangt diese Außenhaut 4 in eine Form 40 (siehe Fig. 14), wobei im unteren Bereich der Form 40 bereits eine zweite Isolierschicht 52 eingelegt ist. In Fig. 15 ist ersichtlich, wie durch Schließen der Formhälften 40 ein Hohlraum 41 gebildet wird, in den ein schäumbarer Kunststoff eingefüllt wird, dort reagiert und aushärtet. Zwei bevorzugte Bestandteile dieses Schaumkunststoffes sind dabei Polyol P und Isocyanat I. Nach dem Öffnen der Form 40 (siehe Fig. 16) kann der ausgehärtete Dachziegel 1 bestehend aus Außenhaut 4 und den beiden Isolierschichten 51 und 52 entnommen werden.

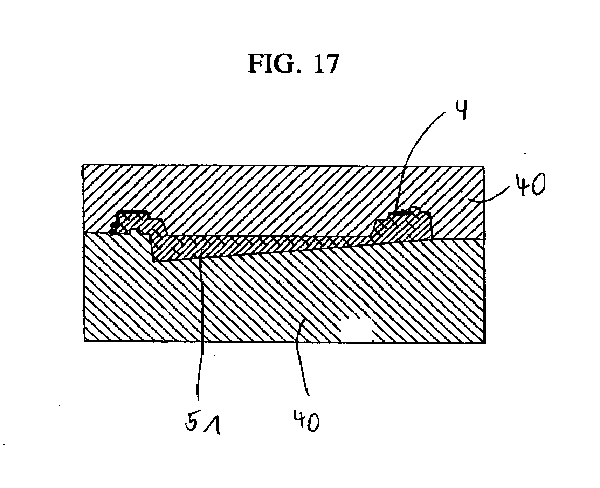

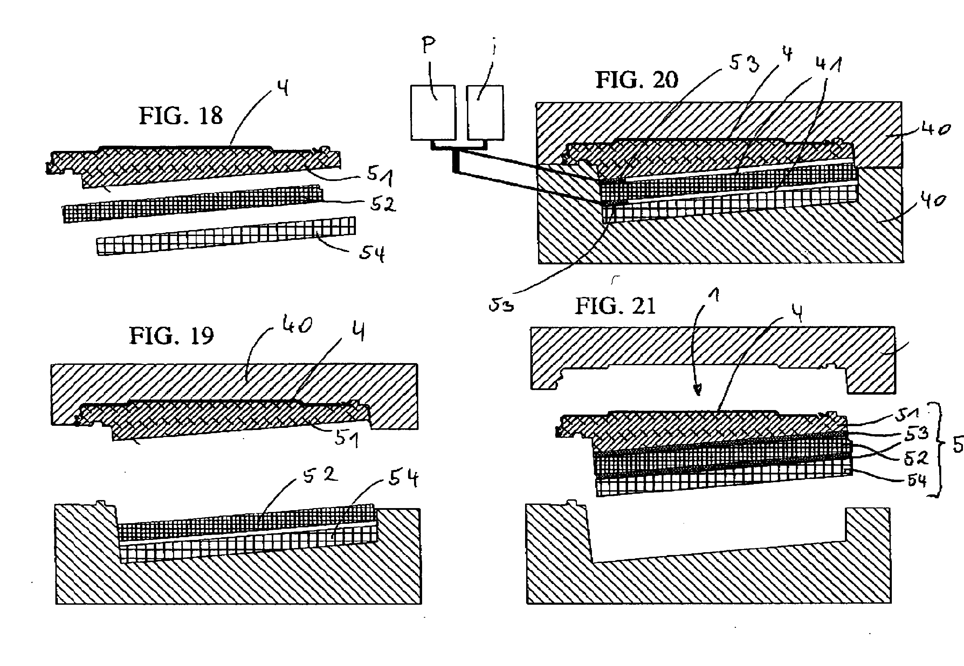

Eine zweite alternative oder auch teilweise mit der ersten kombinierbare Variante der Herstellung geht aus den Fig. 17 bis 21 hervor. Dabei wird in Fig. 17 zuerst die erste Isolierschicht 51 an die Außenhaut 4 in der Form 40 angeschåumt. Anschließend werden, wie in Fig. 18 und 19, vorgefertigte Isolierschichten 52 und 54 in die offene Form 40 eingelegt. Nach dem Schließen der Form 40 wie in Fig. 20 verbleiben zwei Hohlräume 41, in welche reagierender Schaumkunststoff eingefüllt wird. Nach dem Aushärten und Öffnen der Form 40 ergibt sich ein gesamter Dachziegel 1 bestehend aus Außenhaut 4 und Isolierkörper 5, wobei dieser Isolierkörper 5 aus den beiden Isolierschichten 51 und 52, den Zwischenschichten 53 und der weiteren Schicht 54 besteht.

In Fig. 24a ist die bisher bekannte, nachteilige Anordnung von Dachziegeln 1,2 dargestellt. Wenn nun beispielsweise der in dieser Fig. 24a mit 2 bezeichnete Dachziegel ausgetauscht werden soll, müssen alle darüber angeordneten Dachziegelreihen nacheinander abgenommen werden, um zu diesem einen Dachziegel 2 zu gelangen. Dagegen ist gemäß Fig. 24b nun der Zugang zum mit 2 bezeichneten Dachziegel bereits durch Herausnehmen, der in Dachhöhenrichtung H über ihm angeordneten weiteren Dachziegel möglich,

Durch die hier vorliegende Erfindung ist somit ein dichter Dachverband 50 mit drei wasserführenden Ebenen 91, 92, 93, einer einfacheren Austauschbarkeit von Einzelziegeln 1, 2 und einer verbesserten Vorpositionierung durch die Anbringung von schienenförmigen Bauteilen 3 gegeben.

Die schienenförmigen Bauteile 3 selbst werden bevorzugt aus Schaumkunststoff geschäumt und bilden bevorzugt selbst eine weitere Isolierschicht des gesamten Dachverbandes 50. Durch den Entwässerungskanal 10 im schienenförmigen Bauteil 3 wird eine komplett unabhängige zweite Wassertrennebene 92 erreicht. Durch die Befestigung zweier Dachziegel 1, 2 an einem schienenförmigen Bauteil 3 ohne Ausbilden eines Bohrloches in den Dachziegeln 1, 2 wird eine unkomplizierte, einfache und besonders handliche Fixierung und Montage des gesamten Dachverbandes 50 erreicht.

Die oben diskutierten Maßnahmen können auch einzeln oder beliebig miteinander kombiniert bei der Erfindung vorgesehen sein.

### Bezugszeichenliste

- 1: Dachziegel
- 2: Dachziegel
- 3: schienenförmiges Bauteil
- 4: Außenhaut
- 5: Isolierkörper
- 6: Befestigungsschraube
- 7: Vertiefung
- 8: Nut-Feder-Verbindung
- 9: Haltestufen
- 10: Entwässerungskanal
- 11: Unterseite
- 12: Oberseite
- 13: Halteschräge
- 14: Einraststufen
- 15: Breitseitenontwässerungskanal
- 20: Solarelemente
- 21: Fluidleitung
- 22: Anschlussstück
- 24: Breitseite
- 25: längsseitige Oberfläche
- 26: Einlegekern
- 27: Breitseitennut
- 28: Breitseitenfeder
- 29: Abflussbereich
- 30: Dach
- 31: Haltemittel bzw. Befestigungslasche
- 32: Verstärkungsschicht
- 33: Befestigungshaken
- 34: Ausbuchtung
- 35: Abschlussstück
- 36: Befestigungsmittel
- 40: Form
- 41: Hohlraum
- 50: Dachverband
- 51: erste Isolierschicht
- 52: zweite Isolierschicht
- 53: Zwischenschicht
- 54: weitere Schichten
- 55: Noppenstruktur
- 56: Klebeschicht
- 57: Führungsnoppen
- 58: Scheitellinie
- 61: Schraubenkopf
- 62: Kalotte
- 63: Abdeckschiene
- 64: Schutzschiene
- 70: Dachtragekonstruktion
- 71: Verschalung
- 72: Dachsparren
- 73: Querträger
- 81: Nut des schienenförmigen Bauteils 3
- 82: Feder des Dachziegels
- 83: Feder des Dachziegels
- 84: Feder bzw. Erhöhung des schienenförmigen Bauteils 3
- 85: Feder bzw. Erhöhung des schienenförmigen Bauteils 3
- 86: zentrales Plateau
- 87: Nut im Dachziegel
- 88: Nut im Dachziegel
- 90: Gebäude
- 91: erste wasserführende Ebene
- 92: zweite wasserführende Ebene
- 93: dritte wasserführende Ebene
- B: Dachbreite
- H: Dachhöhe
- P: Polyol
- I: Isocyanat

## Patentansprüche

1. Dachziegel (1) mit:
- einer - insbesondere metallischen - witterungsbeständigen Außenhaut (4) und
- einem mit der Außenhaut (4) verbundenen und von dieser wenigstens teilweise abgedeckten Trägerkörper (5),
wobei der Trägerkörper (5) aus wenigstens zwei Schichten (51, 52, 53, 54) besteht, von denen eine erste Schicht (51) mit der Außenhaut (4) und die restliche/n Schicht/en (52, 53, 54) mit der ersten Schicht (51) verbunden bzw. verbindbar ist/sind, **dadurch gekennzeichnet, dass** die erste Schicht (51) mit der Außenhaut (4) vorkonfektioniert ist und die restliche/n Schicht/en (52, 53, 54) nachträglich mit der ersten Schicht (51) verbunden bzw. verbindbar ist/sind.

2. Dachziegel nach Anspruch 1, **dadurch gekennzeichnet, dass** die restliche/n Schicht/en (52, 53, 54) nur über die erste Schicht (51) mit der Außenhaut (4) verbunden bzw. verbindbar ist/sind.

3. Dachziegel nach Anspruch 1 oder 2, **dadurch gekennzeichnet, dass** die Außenhaut (4) gänzlich die der Witterung ausgesetzte Seite des Dachziegels (1) bildet.

4. Dachziegel nach einem der Ansprüche 1 bis 3, **dadurch gekennzeichnet, dass** zumindest eine Schicht (51, 52, 53, 54) des Trägerkörpers (5) eine Isolierschicht ist.

5. Dachziegel nach einem der Ansprüche 1 bis 4, **dadurch gekennzeichnet, dass** die erste Schicht (51) an der Außenhaut (4) angeschäumt oder angeklebt ist.

6. Dachziegel nach einem der Ansprüche 1 bis 5, **dadurch gekennzeichnet, dass** die zweite Schicht (52) mit der ersten Schicht (51) durch eine geschäumte Zwischenschicht (53) verbunden oder an dieser angeklebt ist.

7. Dachziegel nach einem der Ansprüche 1 bis 5, **dadurch gekennzeichnet, dass** weitere schalldämmende, stabilitätsgebende und/oder dampfabweisende Schichten (54) zwischen oder an den Schichten (51, 52) angeordnet sind.

8. Dachziegel nach einem der Ansprüche 1 bis 5, **dadurch gekennzeichnet, dass** auf einer Seite, vorzugsweise der trägerkörperabgewandten Seite, der Außenhaut (4) Solarelemente (20) angeordnet sind.

9. Verfahren zur Herstellung eines Dachziegels, **gekennzeichnet, durch** die Schritte:
- Herstellen einer witterungsbeständigen Außenhaut (4),
- Herstellen einer ersten Schicht (51),
- Verbinden der ersten Schicht (51) mit der Außenhaut (4),
- Herstellen einer zweiten Schicht (52),
- Verbinden der zweiten Schicht (52) mit der außenhautabgewandten Seite der ersten Schicht (51).

10. Verfahren nach Anspruch 9, **gekennzeichnet durch** die Schritte:
- Herstellen der witterungsbeständigen Außenhaut (4),
- Anschäumen der ersten Schicht (51) an der Außenhaut (4),
- separates Herstellen/Schäumen weiterer Schichten (52, 54),
- Einlegen der Teilstücke (4, 51, 52, 54) in eine gemeinsame Form (40), wobei zumindest ein Hohlraum (41) zwischen den Teilstücken (4, 51, 52, 54) freigelassen wird,
- Einbringen von Füllmaterial, vorzugsweise Weichschaum (53), in den zumindest einen Hohlraum (41),
- Verbinden der Teilstücke (4, 51, 52, 54) **durch** das Füllmaterial.

11. Dachverband (50) aus zumindest zwei Dachziegeln (1, 2) gemäß einem der Ansprüche 1 bis 8 und zumindest einem auf einem Dach (30) montierbaren schienenförmigen Bauteil (3).

12. Dachverband nach Anspruch 11, **dadurch gekennzeichnet, dass** das schienenförmige Bauteil (3) zwischen den zwei Dachziegeln (1, 2) angeordnet ist und die Dachziegel (1, 2) das schienenförmige Bauteil (3) teilweise überdecken, wobei die zwei Dachziegel (1, 2) über eine zwischen den Dachziegeln (1, 2) einbringbares Befestigungsmittel, vorzugsweise Befestigungsschraube (6), am schienenförmigen Bauteil (3) anbringbar, vorzugsweise verschraubbar sind.

13. Dachverband nach Anspruch 12, **dadurch gekennzeichnet, dass** die wenigstens zwei Dachziegel (1, 2) längsseitig aneinander angrenzen, wobei in zumindest einer der längsseitigen Oberflächen (25) eine Vertiefung (7) zur Führung des einbringbaren Befestigungsmittels ausgebildet ist.

14. Dachverband nach Anspruch 12 oder 13, **dadurch gekennzeichnet, dass** der Kopf (61) der Befestigungsschraube (6) auf beiden Dachziegeln (1, 2), vorzugsweise an deren witterungsbeständiger Außenhaut (4), gegebenenfalls über eine Kalotte (62), kraftschlüssig anliegt.
